# EUROPEAN PATENT SPECIFICATION

(11) **EP 2 440 323 B1**
(45) Date of publication and mention of the grant of the patent: **28.08.2019**
(21) Application number: 10732722.3
(22) Date of filing: 09.06.2010
(51) Int. Cl.: B01J 19/08, H01J 9/02

(54) **METHODS AND APPARATUS FOR PARTICLE PROCESSING WITH PLASMA**
VERFAHREN UND VORRICHTUNG ZUR PARTIKELVERARBEITUNG MIT PLASMA
PROCÉDÉS ET APPAREIL POUR LE TRAITEMENT DE PARTICULES AVEC UN PLASMA

(30) Priority: 09.06.2009 GB 0909999; 09.06.2009 GB 0910000
(43) Date of publication of application: 18.04.2012
(73) Proprietor: Haydale Graphene Industries plc, Capel Hendre Ammanford Carmarthenshire SA18 3BL (GB)
(72) Inventor: WALTERS, Ian, Port Talbot SA13 2EZ (GB)
(74) Representative: Mewburn Ellis LLP
(86) International application number: PCT/GB2010/001132
(87) International publication number: WO 2010/142953

(56) References cited:
- JP-A- 6 000 365
- CHEN C ET AL: "Amino group introduction onto multiwall carbon nanotubes by NH3/Ar plasma treatment" CARBON, ELSEVIER, OXFORD, GB, vol. 48, no. 4, 1 April 2010 (2010-04-01), pages 939-948, XP026859533 ISSN: 0008-6223 [retrieved on 2009-10-29]

## Description

This invention has to do with methods and apparatus for plasma treatment of nanoparticles.

In one aspect the methods and apparatus disclosed have particular application for the plasma treatment of carbon nanotubes and carbon nanospheres.

These particles present unique difficulties in handling and processing together with great potential utility in advanced materials applications.

Other particular aspects relate to plasma treatment of particles as a preliminary to their being incorporated into other products and materials, especially as fillers, structural fillers, functional components, reinforcements or extenders dispersed in a matrix binder material.

### BACKGROUND: CNTs

The extraordinary properties of carbon nanotubes ("CNTs") have been known for nearly 20 years. Many of the important uses envisaged to exploit these properties involve dispersing the CNTs in matrix or binder materials. Since CNTs are by nature highly chemically inert, they have little interaction with other substances such as solvents or organic molecules. They also have extremely high aspect ratio. Their tendency is therefore to clump together, and dispersing them in the material of choice for the envisaged application is often an insurmountable obstacle.

It has been proposed to functionalise CNTs by chemical treatment, e.g. by boiling in acid, creating a more chemically active surface to enable dispersion of the CNTs in solvents or in other materials. This has met with a measure of experimental success, but the techniques for functionalising the particles remain highly inefficient and inconvenient and are mostly useful only for small-scale or laboratory purposes.

Plasma treatment of CNTs has been proposed as a means of providing chemical activity of the CNT surface. Plasma treatment, usually using dielectric barrier discharge, is in itself a widely-known method of activating or functionalising surfaces especially of plastics substrates in industry. However we are not aware that any effective method or apparatus, deploying plasma treatment to surface-activate or surface-treat sub-micron particles such as CNTs, at practically useful quantity, degree of overall activation, uniformity and reproducibility, has previously been provided.

### BACKGROUND: GENERAL PARTICLE PROCESSING

In the general field of particle processing, various proposals have been made for plasma treatment of polymer materials including polymer particles. These involve use of a variety of different types of plasma, taking into account the material's chemical nature and physical form. JP-A-60/00365 describes plasma treating powder in an atmospheric-pressure plasma generated in a laminar gap between nested metal cylinders, the powder running along the gap as they rotate at an inclination. JP-A-2004/261747 rotates the powder in a drum through the centre of which an electron beam is directed to generate plasma in a treatment gas. The drum is housed in an exterior vacuum chamber. JP-A-2005/135736 treats particulates in a rotating drum subject to a plasma-generation means which may be an HF electric field or microwave drive.

This general aspect of our proposals relates to plasma treatment methods for particles in which plasma is generated in a rotating drum, and the particles are exposed to the plasma as the drum rotates.

In relation to such methods we address the following issues.

Firstly, we consider the intensity and uniformity of treatment. It is not difficult to ensure that all particles are exposed to some plasma treatment, but it is relatively demanding to provide a degree of treatment sufficiently uniform for good or even adequate performance in many areas. If for example the particles are to be incorporated into a polymeric matrix, the chemical activity of the exposed surface which contacts the matrix material is crucial to achieving good product performance. If a significant percentage of the overall particle surface (considered over the entire population of particles) has been over- or under-treated, the deficiency in product performance relative to an ideal situation in which all of the surface has been optimally treated will be great.

Practical factors involved include achieving a suitable degree of movement or agitation of the particles, and also the difficulty of controlling the plasma. The atmospheric pressure plasmas widely used for polymer surface activation in industry (especially "dielectric barrier discharge" plasmas) are generated across small gaps, where free particle movement is impossible, or in zones near sharp electrodes (corona discharge) where the active region is too small for treating a mass of particles. These plasmas also tend to be intense ("hot"), so that inequalities of treatment time and exposure will lead to large non-uniformities in particle behaviour post-treatment. Low-pressure plasmas are better able to extend over a substantial region, but tend to be unstable according to the shape and conductivity of the treatment space and surround structure, especially in dynamic conditions (e.g. rotation of a drum, movement of particles, and if there is flow of gas), so that undesired streaming or arcing and plasma-free areas arise and treatment is unsuccessful.

### First Aspect: Nanoparticles

In one aspect we propose new methods and apparatus for treating particles such as CNTs, as defined in claims 1 to 13.

Particles such as CNTs or other nanoparticles ("particles" henceforth) are put into a vessel, the vessel is closed and the particles are then subject to plasma treatment by generating plasma inside the vessel.

The plasma treatment involves positioning electrodes at opposing positions in relation to an interior space of the vessel, and generating plasma between the electrodes in a region inside the vessel.
One electrode extends into an interior space of the vessel to be surrounded by the space, i.e. as a central or axial electrode, and another electrode is an outer or surrounding electrode. The outer wall of the vessel is desirably cylindrical, or circular in cross-section. It may be or comprise the counter-electrode. The vessel is in the form of a drum.

In a particularly preferred embodiment an interior e.g. axial electrode is, or comprises, or is positioned in, a re-entrant portion or socket formation of the vessel wall. For example a re-entrant portion of the vessel wall may extend axially, as a hollow formation, through the middle of the vessel space. It may be (or comprise) a dielectric vessel wall portion, or a conductive vessel wall portion. To generate plasma, a central electrode connected to an electrical driver can be connected to or inserted into this central re-entrant electrode or electrode cover of the vessel. A counter-electrode is positioned around, outside or surrounding the vessel wall. Application of an electric field between the electrodes generates plasma in the vessel.

The plasma treatment is by means of low-pressure plasma of the "glow discharge" type, usually using DC or low-frequency RF (less than 100 kHz).

The pressure in the vessel for the treatment is less than 1000 Pa, more preferably less than 500 Pa, less than 300 Pa and most preferably less than 200 Pa or less than 100 Pa.

To generate low-pressure or glow plasma, the vessel interior needs to be evacuated. An evacuation port may be provided for this purpose, and in the present method is connected to an evacuation means via a suitable filter for retaining the particles. The filter should be selected as regards its pore size to retain the particles in question, and as regards its material to withstand the processing conditions and to avoid undesirable chemical or physical contamination of the product, depending on the intended use thereof. For the retention of particles, HEPA filters, ceramic, glass or sintered filters may be suitable depending on the size of the particles. The evacuation port may be in a main vessel wall or in a lid or cover.

During the plasma treatment, the vessel is agitated or rotated to cause relative movement of the particles inside. Preferably this includes movement of the particles falling through the vessel space, through the plasma zone. In a preferred embodiment the vessel is rotated around an axis, e.g. an axis of a re-entrant electrode wall portion as mentioned above. The vessel walls may have baffles, vanes or other particle-retaining formations which pick the particles up as the vessel rotates and then drop them through a central region where plasma is formed. These formations may be integral with or fixed to the vessel wall. They are desirably of non-conductive (dielectric) material.

In a low-pressure plasma treatment system, application of vacuum is combined with a feed of gas for plasma formation, so that the treatment atmosphere can be controlled and, if necessary, contaminated or spent treatment gas removed during the process. Again, this gas feed may be through a particle-retaining filter built into the wall of the vessel. One suitable place for a gas feed filter is in a re-entrant electrode or electrode cover portion as mentioned above.

For practicality of manufacture, the above-mentioned internally-projecting electrode portion, or electrode cover portion into which an external electrode is inserted, may itself be detachably inserted into the vessel body. This may be by means of a screw thread, ground joint, plug fit or other suitable sealed union. The joint should be able to prevent escape of particles. This electrode portion or electrode cover portion may be generally tubular. It may be cantilevered, or may bridge between opposed walls. When cantilevered, a gas inlet filter may be positioned at a distal end thereof.

The vessel may be provided with a removable or openable sealable lid or closure, e.g. to cover a main opening through which particles may be loaded into and/or unloaded from the vessel interior. The vessel wall e.g. lid may incorporate a port for the application of vacuum, e.g. including a filter as mentioned above. The vessel wall e.g. lid may incorporate a port for the injection of reagent or gas for chemical treatment.

The lid, closure or vessel wall may include a port for the injection of liquid. Injecting or pouring in liquid after the particle treatment is a preferred aspect of the present proposals. After plasma treatment, the particles are very hard to handle. Untreated particles are difficult to disperse for technical uses, but relatively easy to handle because they clump together. After treatment the particles are much easier to disperse for technical applications, but very difficult to handle because they tend to fly apart, being often similarly statically charged. They constitute a health risk.

By treating the particles while they are confined within a vessel, handling is easier and the health risk reduced. By then mixing the particles in the same vessel with a liquid vehicle, carrier, binder or solvent after treatment, introducing the liquid through a port as mentioned, handling difficulties can again be reduced because the treated particles disperse in the liquid introduced and can subsequently be handled in liquid dispersion.

One beneficial application of the procedure is for surface activation of particles made by or to be used by an organisation or at a site without suitable plasma treatment facilities. Having obtained or made the desired particles, they can load them directly into a vessel of the kind described. Another organisation or site having a plasma-generating machine can load the vessel onto the machine, apply evacuation and gas feed as appropriate, position the appropriate electrode, electrodes or other plasma-field-generating means in relation to the vessel, apply plasma treatment, and return the treated particles to the first organisation or site without the particles ever having to leave the vessel. A liquid vehicle or matrix may be introduced into the vessel before or after this.

An electrode or electric supply of the plasma treatment apparatus may be inserted into or connected to a re-entrant electrode or electrode cover formation of the vessel. If the re-entrant formation is itself conductive, then it constitutes an electrode when the system electrode is connected to it. If the re-entrant formation of the vessel comprises or constitutes an electrode cover of dielectric material, e.g. glass, then the inserted system electrode needs to fit closely within it to avoid the generation of undesired plasma in gaps between these components. A system electrode in rod or tube form is then desirable, fitting into an elongate tubular cover.

An external or counter-electrode may be an external conductive drum or housing. It may be or be incorporated into an outer wall of the treatment vessel itself, e.g. a drum wall. Or, it may be a separate rotatable treatment drum for a plasma apparatus, inside which the treatment vessel containing the particles can be supported to rotate with the drum.

The treated particles have a wide range of uses. In one preferred embodiment the particles, treated by the present methods, are incorporated into a polymeric matrix. This polymeric matrix may be, or may form the basis of, a specialised functional component such as a conductive plastics component, or an electro-functional organic component or material, such as a photovoltaic element or layer.

An application for particles which have been activated according to the present method is in an ink, paint or coating material. A masterbatch of a corresponding liquid may be prepared directly in the treatment vessel containing the activated particles.

A liquid introduced into the vessel for dispersal of the particles may be a curable polymer composition, or component or precursor thereof.

Since the particles tend to carry the same electrical charge, they naturally tend to self-disperse in a fluid or liquid matrix, vehicle or carrier.

An alternative to the use of liquid is to store the particles at low temperature, e.g. under liquid nitrogen, to minimise chemical reaction with the activated particles. This may be done in the same vessel.

### Second Aspect: General Particle Treatment

Our following proposals can be used in combination with any proposals described in the first aspect above where consistent.

In a first proposal here a plasma treatment drum has a central (axial) electrode, preferably elongate in form, whereby plasma is generated in a plasma zone extending along, and preferably over substantially all the length of, the electrode. Desirably plasma is also generated substantially all around (circumferentially) the electrode, or around at least half its circumference.

A corresponding counter-electrode is formed outside, as part of, or adjacent the inside of the outer wall of the drum.

Low-pressure discharge plasma, of the "glow discharge" type using DC or low-frequency RF (less than 100 kHz) is formed. The treatment chamber operates at a pressure less than 1000 Pa, more preferably less than 500 Pa, less than 300 Pa, and most preferably less than 200 Pa or less than 100 Pa.

The wall of the drum can have lifter formations, such as paddles, vanes, baffles, recesses, scoops or the like which are shaped and dimensioned so that, as the drum is rotating at a pre-determined operating speed, with a mass of particles for treatment contained in the treatment chamber, particles are lifted by the drum wall formations from a lower region of the chamber and released to fall selectively along a path passing through the plasma zone adjacent the axial electrode.

The size of the particle charge in the drum is not critical. Typically it occupies less than 25% and preferably less than 15% of the available volume in the treatment chamber (assessed with the particles in a loose bed e.g. immediately after loading or after rotation ceases).

By experimentation we have found that with this setup, in which plasma in a rotating drum is localised along a generally axial region, and the drum wall is formed and the drum rotated in such a manner that the particles fall preferentially through that region, in conjunction with the use of a low-pressure discharge plasma, improved uniformity and control of the degree of particle treatment can be achieved. This is reflected in improved performance of the resultant population of particles.

A proposal herein, which is also usable in combination with the first proposal above, relates to a manner of feeding gas to a treatment chamber for the formation of low-pressure discharge plasma adjacent an elongate electrode. It is desired to provide conditions in which the treatment chamber is subjected to ongoing, and preferably continuous, evacuation of gas, e.g. to a vacuum pump via a suitable filter to retain particles in the chamber and protect the pump. This can have the important function, especially when treating previously-compounded materials, of progressively clearing from the treatment chamber the products of chemical degradation and volatilisation, which otherwise tend to accumulate on the product or on the apparatus components. A feed of clean gas is needed to compensate for the evacuated gas in this flushing operation. For many purposes, including surface activation of particles, the specific nature of the gas is not critical provided that it can sustain plasma. For the treatment of polymer particles, oxygen-containing gases and especially air are suitable and economical.

According to our proposal, fresh gas is injected into the chamber through a gas injection structure or distributor on the electrode at the axis of the chamber.

It is desirably arranged that the axial electrode be removable, e.g. detachable from an opening in an end wall of the treatment drum, to facilitate cleaning and processing.

A further proposal herein, again combinable with other proposals herein, relates to the size of the axial electrode (generally a cathode). Because of the convergent geometry, the plasma-generating field is at its most intense closest to the centre. Excessive plasma intensity can create problems especially if there is contamination. What we propose is a central electrode e.g. cathode whose external diameter is a substantial proportion of the internal dimension of the treatment chamber. Thus, the radial (or maximum transverse) dimension of the central electrode may be at least 5%, at least 10%, at least 15%, at least 20% or at least 25% of the corresponding treatment chamber dimension. Typically this is a drum diameter. By presenting a cathode surface which is spaced from the geometrical centre of the treatment centre, the field intensity is less, and the plasma may be correspondingly less, and also a larger region of plasma can be provided for the particles to be brought into contact with.

The size of the treatment drum is not particularly limited. We envisage that it may be anything from 1 litre up to 2000 litres in capacity.

While a central electrode is used in the present invention , it is also possible to carry out plasma treatment in a rotating drum of the kind described but creating the axial or central plasma region by other means e.g. by a magnetron and wave guide.

As regards the particle size, the methods described herein are particularly beneficial with particles whose maximum size is 1 mm or smaller, more preferably 0.5 mm or smaller, still more preferably 0.2 mm or smaller. It is with these small particles that the maximum relative benefit is achieved by an effective plasma treatment. The material may be e.g. rubber or polymer or nanoparticles such as carbon nanotubes. The "maximum size" can be taken as referring to the capacity to pass through a corresponding sieve, since particles are commonly graded by standard sieve sizes.

The treatment time is not particularly limited, and can readily be determined and optimised by testing according to the materials involved, the plasma conditions and the intended end-use. In many cases a treatment time (that is to say, for operation of the drum with the plasma active and the particles moving in it) of from 30 to 500 seconds will be effective.

### BRIEF DESCRIPTION OF THE DRAWINGS

The present proposals are now explained further with reference to the accompanying drawings, in which:
Fig. 1 is a perspective view of a treatment vessel embodying the invention, for CNTs;
Fig. 2 is a schematic view of a central electrode formation in one version;
Fig. 3 is a schematic view of a central electrode formation in another version;
Fig. 4 is a schematic end view of the treatment vessel operating in plasma-generating apparatus;
Fig. 5 is a side view of the same thing;
Fig. 6 is a schematic perspective view showing a second embodiment of treatment apparatus;
Fig. 7 is a schematic end view showing the movement of particles during treatment;
Fig. 8 shows the form of a basis electrode;
Fig. 9 is a perspective view of a further embodiment of treatment drum, and
Fig. 10 is an axial cross-section thereof.

### DETAILED DESCRIPTION

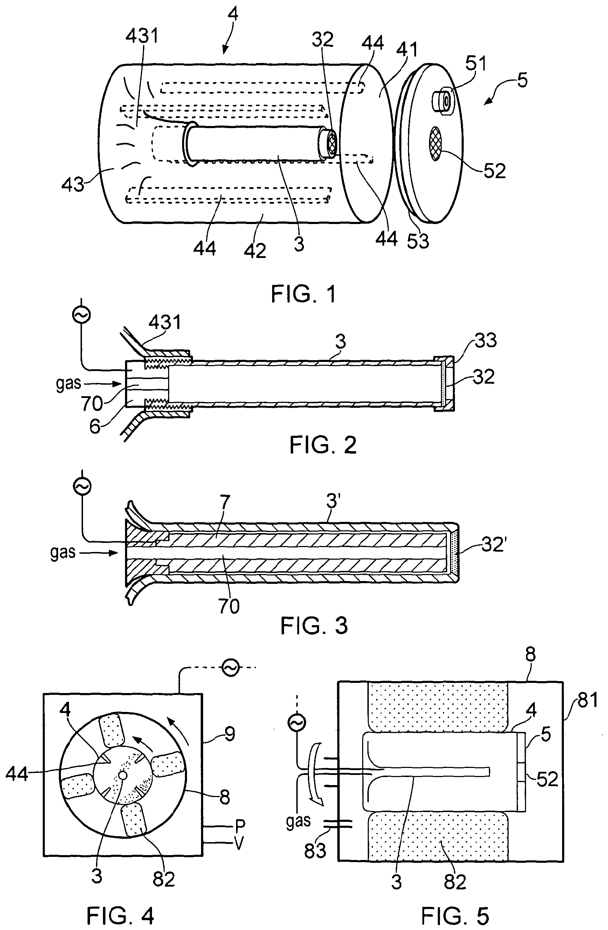

With reference to Fig. 1 a generally cylindrical glass vessel or drum 4 has an integral glass rear end wall 43 and a front opening 41. Quartz or borosilicate glass is suitable. Axially-extending rib formations 44 are distributed circumferentially and project inwardly from the interior surfaces of the drum wall 42. They may be formed integrally with the glass of the wall, or be bonded-on plastics components.

The rear wall 43 has a central re-entrant portion or socket 431 forming an insulative locating support for an electrode formation extending forward axially through the drum interior. This formation may be a fixed metal electrode insert, as exemplified in Fig. 2. The embodiment of Fig. 2 is a tubular electrode with a gas feed port via a fine filter disc 32 closing off its front (free) end e.g. clamped by a screw ring cap 33. Its open rear end is sealingly bonded, or more preferably sealingly but removably connected (e.g. by a thread or tapered plug as shown), into a central opening of the glass socket 431.

Alternatively the interior electrode formation may be or comprise a dielectric electrode cover, e.g. an integral tubular forward extension 3' of the glass wall itself as shown in Fig. 3, having a fine particle filter 32' e.g. of sintered glass or ceramics at its front end. An alternative has a discrete tubular dielectric electrode cover element fixed or bonded in, like the electrode of Fig. 2.

An advantage of removable electrodes/electrode covers is ease of cleaning, replacement or substitution with different ones e.g. of different size, material, filter type etc.

A plastics sealing lid 5 is provided for the open front end of the glass treatment vessel. This lid has a peripheral sealing skirt 53 to plug tightly into the drum opening 41, a filter port 52 incorporating a HEPA filter element, for pressure equalisation with a vacuum system, and a fluid injection port 51 having a sealing cover, for the introduction of liquid.

In use, a charge of particles such as CNTs is put into the vessel 4. The lid 5 is sealed. The HEPA filter 52 is sufficiently fine that the particles cannot escape, and can in any case be covered with a seal as a precaution against damage. The particle-loaded vessel is sent for plasma treatment. This is done using plasma-generating apparatus having a treatment chamber with vacuum generation, plasma-forming gas feed, means for rotating the vessel and system electrode drive for generating a suitable electric field for plasma generation, e.g. RF energy.

In the case as in Fig. 2 where the electrode 3 is integrated, it is necessary to connect this by a suitable connector, e.g. a threaded element 6 with a gas feed conduit 70, to the electrical drive. Of course, this connector could alternatively extend further into or all along inside the tubular electrode 3. However the connector is in any case removably or releasably connected.

In the case as in Fig. 3 where the drum comprises a dielectric electrode cover 3', an elongate electrode 7 of the plasma-generating apparatus is inserted, fitting closely to avoid intervening space (the slight clearance in the drawing being only to indicate the discrete parts).

A central gas feed channel 70 is provided inside the connector 6 or electrode 7, for feed of gas to the vessel interior via the filter 32,32' at the front end of the electrode.

Figs. 4 and 5 show a plasma treatment apparatus schematically: a support container 8 is mounted rotatably in a fixed sealable housing 9. Either of these or part thereof may comprise the counter-electrode. The counter-electrode should be shaped and positioned in relation to the axial electrode to enable stable glow plasma to form substantially all along the axial electrode inside the treatment chamber. The particle treatment vessel 4 is loaded into the support container 8 through a front hatch 81, and held axially in position by locating pads 82, and by connection of the axial electrode at its rear end.

The housing 9 is evacuated via an evacuation port V, and the vacuum applies through the system via container vacuum port 83 and the front filter port 52 of the treatment vessel. Gas is fed in axially via the filter 32,32' in the electrode formation. Application of RF or other suitable power according to known principles creates plasma in the vessel 4, especially in the region adjacent the axial electrode formation 3. As the drum rotates (Fig. 4) the internal vanes 44 carry the nanoparticles up and cast them down selectively through this plasma-rich zone.

Usually a brief plasma treatment suffices to achieve the desired effect, for example, for from 5 to 100 seconds. The treatment atmosphere may be chosen freely provided that it will sustain plasma. An oxygen-containing atmosphere is an example, and is effective to produce oxygen-containing functional groups on the particles, thereby activating them.

Thus, the treatment vessel 4 can be plugged into a plasma apparatus and operated to plasma-activate the CNTs without ever needing to be opened. After treatment, the liquid introduction port 51 can be used for the injection of a suitable liquid to disperse and/or carry the particles. This might be e.g. a solvent vehicle, water or polymer material.

The particles e.g. CNTs may be initially prepared by any known method. They may be multiwall nanotubes. [Although sometimes described as "sub-micron" in size it is understood that the tubes may have very high aspect ratio and may actually be longer than a micron.]

As-manufactured CNTs usually contain a significant proportion of amorphous carbon and contaminants e.g. synthesis catalyst residues. Some of these are weakly adhered to the CNTs. Loose fine non-CNT carbon residues or fragments may also constitute a significant proportion of the material. We find that our treatment is effective in reducing these as well as in functionalising the CNT surfaces. CNTs are vulnerable to plasma in an oxygen-containing atmosphere and can be structurally damaged if too many functional defects are created. However the relative uniformity and controllability of exposure achievable with the present methods and apparatus enables a treatment intensity/period to be determined that will clean and concentrate the CNTs (concentrate by converting the mentioned adherent and accompanying residues to gaseous products, e.g. oxides) and enable functionalising to a desired degree while generally avoiding damaging the CNTs.

### Second Embodiment: general particle treatment

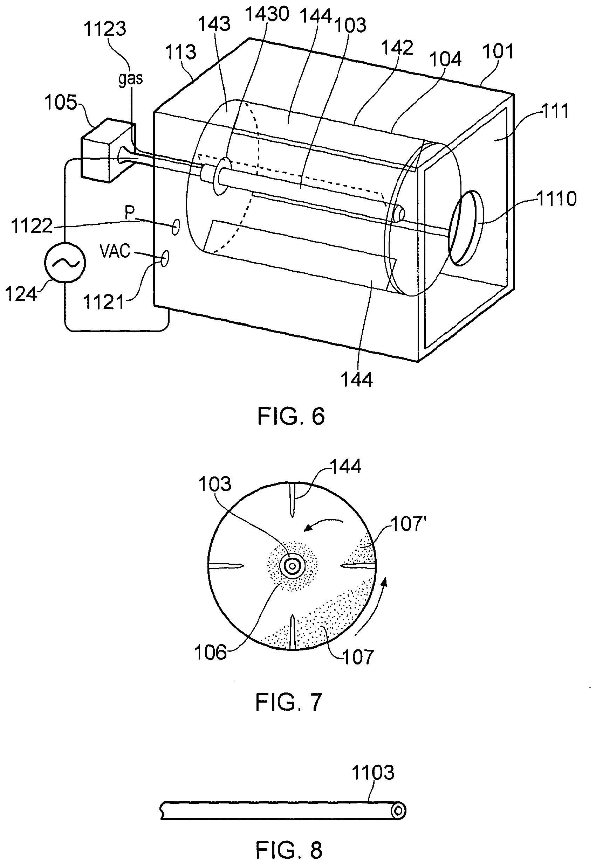

With reference to Fig. 6, indicated are an outer conductive housing 101 in the form of a box with a front wall 111 which can be opened, and a central viewing window 110. In itself, this is a known type of plasma treatment apparatus. It has a connector 1121 to a vacuum source and a connector 1122 to a pressure meter. It also has an RF power source 1124 connected between the outer conductive housing 101 and a central axial electrode 103 which will be discussed below.

The treatment drum 104 is mounted axially horizontally in the housing 101, rotatable by drive 105 over a range of selectable speeds. It has a flat front wall or lid 141, a cylindrical outer wall or drum wall 142 and a flat back wall 143. The back wall 143 has a central opening 1430 through which the central electrode 103, mounted fixedly to a back wall 113 of the housing, projects into the treatment chamber within the drum. The electrode 103 extends most of the length of the drum.

The outer drum wall carries a set of radially-inwardly projecting vanes 144 - see also Fig. 7.

The size of the apparatus is not particularly restricted. In our small-scale work we have used a drum about 250mm in diameter but much larger sizes can be used.

Plasma generating field may be applied between the housing and the central electrode 3 as shown. Voltage is not critical, e.g. 200 to 250V. The counter-electrode can instead be provided by the drum 104 e.g. by a metal cylindrical drum wall 142 thereof, or by metal structure fixed on to it either outside or inside the drum wall.

Suitable provision needs to be made to inhibit arcing between the points of closest approach of the axial electrode 103 and the oppositely-charged drum wall or housing wall. The drum wall may have a pressure equalisation port with a particle-retaining structure such as a filter so that gas can pass into and out of the drum.

The inside of the drum has a set of longitudinally-extending vanes or baffles 144 spaced equidistantly around its inner periphery. These are desirably of non-conductive material to inhibit arcing or streaming of plasma between the electrode 103 and the edges of the baffles 144.

A further feature is a feed for suitable gas to the interior of the treatment drum 4 to form plasma. This gas feed 123 is indicated schematically in Fig. 1 and involves feeding in gas along the central electrode 3, which is generally tubular. Gas is fed at a controlled rate. The vacuum system 121 is continuously, regularly or pressure-dependently applied during operation. These flows are balanced to maintain a predetermined low-pressure plasma-forming condition in the chamber, with exhausting of contaminated or spent gas from the treatment space, the exhaust gas being replaced by a flow of fresh clean gas to maintain suitable operating conditions. Suitable operating pressures have been mentioned above.

In operation, RF power is applied between the conductive housing 1 (or drum wall, if this is the counter-electrode) and the central electrode 103. The principles of low-pressure gas plasmas are well known. A desirable glow region can be formed closely adjacent along the electrode, as indicated at 106 in Fig. 7.

The basic operation is shown schematically in Fig. 7. A part 107' of a charge of particles 107 resting in the treatment drum 104 is carried round by each passing baffle 144. The rotational speed is set by routine trials, in conjunction with a suitable reach and shape of the baffles, so that the baffles carry the particles up and then throw or drop them down through the central region adjacent to the electrode 3, i.e. selectively through the active glow region 106 of the plasma. This is found to be valuable in achieving an efficient and effective treatment of all of the particles. If the drum is rotated at a random speed, or without baffles, there is still surface activation of particles by plasma but it is slow and more variable among the particle population.

Fig. 8 shows a central electrode in a simple form, a steel tube 1103 fixedly mounted relative to the housing 101. Gas may be fed along such a tube and emerge at the tip. Or, openings may be provided spaced all along/around the tube so that gas permeates out all along/around its length.

In a basic trial, we operated the system with a simple central cathode 1103 as shown, 6.5mm in diameter, a 250mm diameter drum, RF power at 40kHz, operating pressure 0.4 mbar, process gas air fed through the tubular cathode. One kilo of recycled rubber particles (ground tyre rubber) was loaded, maximum particle size about 0.4mm. A relatively uniform glow plasma zone formed all around and all along the electrode 3. The drum was rotated at a speed such that the crumb rubber fell selectively through the glow zone. After about two minutes of treatment the particles were emptied from the drum and found to disperse excellently in water, indicating a high level of surface activation.

For the injection of process gas the treatment chamber may be provided with more than one gas injection point (e.g. different points in the housing or drum and/or different options for injecting gas at or along the central electrode). The appropriate point can then be selected to produce effective treatment according to the material to be treated.

The rotation speed of the treatment drum is desirably adjustable, to arrange that the particles fall selectively through the glow plasma region.

The drum may be formed in various ways. One possibility is a conductive drum wall itself forming a counter-electrode for plasma formation. Front and back end plates may be dielectric. A further possibility is a fully dielectric drum, with a separate counter-electrode structure or other plasma energising structure. This structure may be an external housing.

Glass is a suitable and readily available dielectric material for forming any of the baffles, drum end plates and drum wall. Plastics or ceramic materials may also be used.

### Third Embodiment

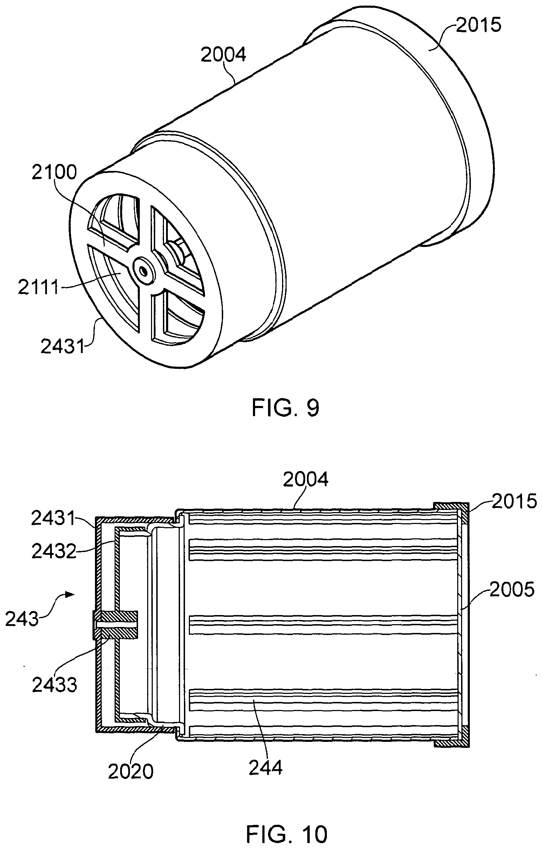

Figs. 9 and 10 show a further treatment drum suitable for treatment of nanoparticles such as CNTs. It has a cylindrical drum wall 2004 of metal e.g. steel or aluminium to act as counter-electrode. It is to be mounted for rotation in a vacuum chamber, e.g. on support rollers.

The end walls are insulative. A rear end wall is of glass or inert plastics e.g. PTFE and comprises inner and outer layers 2432, 2431 between which a filter layer (not shown) is clamped. This end wall filter module has large windows 2111 occupying more than half its area so that gas flow speed through the filter is low. This is found to improve plasma stability i.e. inhibit arcing. The centre of the rear end wall has a holder for the axial electrode, not shown. The electrode is a tubular metal electrode along which process gas is fed in use. It may be housed in a sheath.

A set of eight non-conductive (plastics) lifter vanes 244 is mounted around the inside of the metal drum. The front end wall has a simple insulating sealing wall or lid held on by a tight collar which may optionally - as may the module at the rear end - be screwed onto the metal drum end.

## Claims

1. A method of treating particles, specifically carbon nanotubes or other nanoparticles, using glow-discharge plasma, in apparatus comprising a treatment vessel (4) in the form of a rotatable drum, a central electrode (3) in the drum and a counter-electrode positioned radially outwardly relative to the central electrode (3), the method comprising
- putting the particles into the vessel;
- reducing the pressure in the vessel to 1000 Pa or less;
- feeding gas for forming the plasma into the vessel through said central electrode;
- applying an electric field between the central axial electrode and counter-electrode to generate glow-discharge plasma between the electrodes in a region inside the vessel, and
- agitating or rotating the vessel to cause relative movement of the particles for treating the particles with the glow-discharge plasma.

2. A method of claim 1 comprising rotating the vessel.

3. A method of claim 2 comprising rotating the vessel at a speed whereby the particles fall repeatedly through the vessel space in a plasma zone in the central region along the axial electrode.

4. A method according to claim 1, 2 or 3 in which during the treatment gas is fed into the vessel and gas is evacuated from the vessel through an evacuation port having a filter member to retain the particles in the vessel.

5. A method of any one of preceding claims in which the gas is fed into the vessel through a filter member to retain the particles in the vessel.

6. A method of any one of the preceding claims in which the gas fed is oxygen-containing gas.

7. A method of any one of the preceding claims in which the vessel walls have particle-retaining formations (44) which pick the particles up as the vessel rotates.

8. A method of any one of the preceding claims in which the treatment vessel has a conductive outer wall comprising or constituting the counter-electrode, and insulative end walls.

9. A method of any one of the preceding claims in which the pressure in the vessel is reduced to less than 200 Pa.

10. A method of any one of the preceding claims in which after the plasma treatment a fluid, such as a solvent, a curable polymer composition, or a component or precursor of a curable polymer composition, is added to the particles and the treated particles disperse into the fluid.

11. Apparatus for treating particles in a method as defined in any one of claims 1 to 10, comprising said treatment vessel (4), said electrodes, means for applying an electric field between them, means for rotating the drum at controllable speed, and means for evacuating the drum interior via a filter controlled evacuation port of the drum.

12. A method comprising treating carbon nanoparticles by a method according to any one of claims 1 to 10 and incorporating the treated nanoparticles into a polymeric matrix, ink, paint or coating composition.

13. A method of claim 12 in which the polymeric matrix is used for a conductive plastics component, or a photovoltaic element or layer.

## Patentansprüche

1. Verfahren zur Behandlung von Partikeln, insbesondere von Kohlenstoffnanoröhrchen oder anderen Nanopartikeln, durch Verwendung von Glühentladungsplasma, und zwar in einer Vorrichtung, die ein Behandlungsgefäß (4) in der Form einer drehbaren Trommel, eine in der Trommel angeordnete Mittelelektrode (3) und eine relativ zur Mittelelektrode (3) radial nach außen positionierte Gegenelektrode umfasst, wobei das Verfahren Folgendes umfasst:
- Einbringen der Partikel in das Gefäß;
- Verringern des Drucks in dem Gefäß auf 1000 Pa oder weniger;
- Einleiten von Gas zur Plasmabildung in das Gefäß durch die Mittelelektrode;
- Anlegen eines elektrischen Feldes zwischen der mittleren Axialelektrode und der Gegenelektrode zum Erzeugen von Glimmentladungsplasma zwischen den Elektroden in einer Region im Inneren des Gefäßes, und
Schütteln oder Drehen des Gefäßes zum Erzeugen einer Relativbewegung der Partikel, um die Partikel mit dem Glimmentladungsplasma zu behandeln.

2. Verfahren nach Anspruch 1, umfassend das Drehen des Gefäßes.

3. Verfahren nach Anspruch 2, umfassend das Drehen des Gefäßes bei einer Geschwindigkeit, bei der die Partikel ständig durch den Gefäßraum in eine Plasmazone in der mittleren Region entlang der Axialelektrode hindurchfallen.

4. Verfahren gemäß Anspruch 1, 2 oder 3, wobei während der Behandlung Gas in das Gefäß eingeleitet wird und Gas aus dem Gefäß durch eine Austrittsöffnung austreten gelassen wird, die ein Filterelement aufweist, um die Partikel in dem Gefäß zurückzuhalten.

5. Verfahren nach einem der vorangegangenen Ansprüche, wobei das Gas durch ein Filterelement in das Gefäß eingeleitet wird, um die Partikel in dem Gefäß zurückzuhalten.

6. Verfahren nach einem der vorangegangenen Ansprüche, wobei das eingeleitete Gas ein sauerstoffhaltiges Gas ist.

7. Verfahren nach einem der vorangegangenen Ansprüche, wobei die Gefäßwände Partikelrückhalteformationen (44) aufweisen, die bei Drehen des Gefäßes die Partikel auffangen.

8. Verfahren nach einem der vorangegangenen Ansprüche, wobei das Behandlungsgefäß eine leitfähige Außenwand, welche die Gegenelektrode umfasst oder bildet, und isolierende Stirnwände aufweist.

9. Verfahren nach einem der vorangegangenen Ansprüche, wobei der Druck in dem Gefäß auf weniger als 200 Pa verringert wird.

10. Verfahren nach einem der vorangegangenen Ansprüche, wobei nach der Plasmabehandlung ein Fluid, wie z.B. ein Lösungsmittel, eine aushärtbare Polymerzusammensetzung oder eine Komponente oder ein Vorläufer einer aushärtbaren Polymerzusammensetzung, den Partikeln hinzugefügt wird, und die behandelten Partikeln sich im Fluid verteilen.

11. Vorrichtung zur Behandlung von Partikeln in einem wie in einem der Ansprüche 1 bis 10 definierten Verfahren, umfassend das Behandlungsgefäß (4), die Elektroden, ein Mittel zum Anlegen eines elektrischen Feldes zwischen denselben, ein Mittel zum Drehen der Trommel bei steuerbarer Geschwindigkeit, und ein Mittel zum Entleeren des Trommelinneren über eine filtergesteuerte Austrittsöffnung der Trommel.

12. Verfahren, umfassend das Behandeln von Kohlenstoffnanopartikeln durch ein Verfahren gemäß einem der Ansprüche 1 bis 10 und das Miteinbeziehen der behandelten Nanopartikeln in eine Polymermatrix, eine Farbe, einen Lack oder eine Beschichtungszusammensetzung.

13. Verfahren nach Anspruch 12, wobei die Polymermatrix für eine leitfähige Kunststoffkomponente oder ein Photovoltaik-Element oder -Schicht verwendet wird.

## Revendications

1. Procédé de traitement de particules, en particulier de nanotubes de carbone ou d'autres nanoparticules, utilisant un plasma à décharge luminescente, dans un appareil comprenant un récipient de traitement (4) sous la forme d'un tambour rotatif, une électrode centrale (3) dans le tambour et une contre-électrode positionnée radialement à l'extérieur par rapport à l'électrode centrale (3), le procédé comprenant les étapes consistant à
- mettre les particules dans le récipient ;
- réduire la pression dans le récipient à 1 000 Pa ou moins ;
- alimenter du gaz pour former le plasma dans le récipient à travers ladite électrode centrale ;
- appliquer un champ électrique entre l'électrode axiale centrale et la contre-électrode pour générer un plasma à décharge luminescente entre les électrodes dans une région à l'intérieur du récipient, et
- agiter ou faire tourner le récipient pour provoquer un déplacement relatif des particules en vue du traitement des particules avec le plasma à décharge luminescente.

2. Procédé selon la revendication 1, comprenant une rotation du récipient.

3. Procédé selon la revendication 2, comprenant une rotation du récipient à une vitesse de telle sorte que les particules tombent de manière répétée à travers l'espace de récipient dans une zone de plasma dans la région centrale le long de l'électrode axiale.

4. Procédé selon la revendication 1, 2 ou 3, dans lequel, pendant le traitement, du gaz est introduit dans le récipient et du gaz est évacué du récipient par un orifice d'évacuation comportant un élément filtrant pour retenir les particules dans le récipient.

5. Procédé selon l'une quelconque des revendications précédentes, dans lequel le gaz est alimenté jusque dans le récipient à travers un élément filtrant pour retenir les particules dans le récipient.

6. Procédé selon l'une quelconque des revendications précédentes, dans lequel le gaz alimenté est un gaz contenant de l'oxygène.

7. Procédé selon l'une quelconque des revendications précédentes, dans lequel les parois de récipient comportent des formations retenant les particules (44) qui ramassent les particules lorsque le récipient tourne.

8. Procédé selon l'une quelconque des revendications précédentes, dans lequel le récipient de traitement présente une paroi externe conductrice comprenant ou constituant la contre-électrode, et des parois d'extrémité isolantes.

9. Procédé selon l'une quelconque des revendications précédentes, dans lequel la pression dans le récipient est réduite à moins de 200 Pa.

10. Procédé selon l'une quelconque des revendications précédentes, dans lequel, après le traitement de plasma, un fluide, tel qu'un solvant, une composition de polymère durcissable, ou un composant ou précurseur d'une composition de polymère durcissable, est ajouté aux particules et les particules traitées se dispersent dans le fluide.

11. Appareil de traitement de particules dans un procédé tel que défini dans l'une quelconque des revendications 1 à 10, comprenant ledit récipient de traitement (4), lesdites électrodes, des moyens pour appliquer un champ électrique entre eux, des moyens pour faire tourner le tambour à une vitesse pouvant être commandée, et des moyens pour évacuer l'intérieur de tambour via un orifice d'évacuation commandé par filtre du tambour.

12. Procédé comprenant un traitement de nanoparticules de carbone par un procédé selon l'une quelconque des revendications 1 à 10 et
une incorporation des nanoparticules traitées dans une matrice polymère, une encre, une peinture ou une composition de revêtement.

13. Procédé selon la revendication 12, dans lequel la matrice polymère est utilisée pour un composant plastique conducteur, ou un élément ou une couche photovoltaïque.
